# EUROPÄISCHE PATENTSCHRIFT

(11) **EP 2 708 327 B1**
(45) Veröffentlichungstag und Bekanntmachung des Hinweises auf die Patenterteilung: **14.08.2019**
(21) Anmeldenummer: 13183302.2
(22) Anmeldetag: 06.09.2013
(51) Int. Cl.: B25B 29/02, B25B 23/00, B23P 19/06

(54) **Spannvorrichtung zum Dehnen eines Gewindebolzens sowie hierfür geeignetes Werkzeug, vorzugsweise Antriebsadapter**
Tensioning device for extending a threaded bolt, and tool suitable for this purpose, preferably drive adapter
Dispositif de serrage pour l'expansion d'un boulon fileté et outil approprié, de préférence adaptateur d'entraînement

(30) Priorität: 18.09.2012 DE 202012103565 U
(43) Veröffentlichungstag der Anmeldung: 19.03.2014
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Bungartz Christophersen Partnerschaft mbB Patentanwälte

(56) Entgegenhaltungen:
- WO-A1-2010/054959
- GB-A- 2 222 973
- JP-U- 3 159 908
- US-A- 2 866 370

## Beschreibung

Die Erfindung betrifft eine Spannvorrichtung zum Dehnen eines Gewindebolzens durch Zug an dessen Gewindeendabschnitt, mit einem den Gewindeendabschnitt umgebenden Stützrohr, einem in Verlängerung des Stützrohrs angeordneten Zylinder mit mindestens einem darin in Längsrichtung bewegbaren, mit einer Hydraulikversorgung verbindbaren Kolben; und einer durch den Kolben axial mitnehmbar ausgebildeten Wechselbuchse, wobei die Wechselbuchse an ihrem einen Ende mit einem Innengewinde zum Verschrauben mit den Gewindeendabschnitt versehen ist, an ihrem anderen Ende mit einem Außenmehrkant versehen ist, und mit einem Längskanal und einem darin längsbeweglichen Stift versehen ist, dessen erstes Stiftende gegen das dem Gewindeendabschnitt aufweisende Ende des Gewindebolzens abstützbar ist, und dessen zweites Stiftende über den Außenmehrkant hinaus vorsteht.

Eine gattungsgemäße Spannvorrichtung für Gewindebolzen ist aus der WO 2010/054959 A1 bekannt. Um die Länge des von der Wechselbuchse erfassten Gewindeendabschnitts des Gewindebolzens überprüfen zu können, sitzt längsverschieblich in der Wechselbuchse ein schlanker Messstab. Dieser stützt sich mit seinem unteren Ende gegen die Stirnfläche des zu spannenden Gewindebolzens ab. Sein anderes Ende ragt aus der Wechselbuchse heraus und ist an diesem freiliegenden Ende mit einer Markierung versehen, anhand der sich ablesen lässt, ob der Gewindeüberstand, also die Länge des von der Wechselbuchse erfassten Gewindeabschnitts, für den Spannprozess ausreicht. Zum Aufschrauben der Wechselbuchse auf den Gewindebolzen wird die Spannvorrichtung um ihre Achse gedreht, wodurch die Wechselbuchse auf den freien Gewindeabschnitt des Gewindebolzens aufgeschraubt wird.

Alternativ bestünde bei der gattungsgemäßen Spannvorrichtung die allerdings in der WO 2010/054959 A1 nicht offenbarte Möglichkeit, zum Aufschrauben der Wechselbuchse auf den Gewindebolzen auf einen Außenvierkant zurückzugreifen, mit dem die Wechselbuchse ohnehin versehen ist, und der sich unterhalb des freiliegenden Stiftendes befindet. Auf diesen ließe sich theoretisch ein Maul- oder Ringschlüssel aufsetzen, um die Wechselbuchse zu drehen und so mit ihrem unten angeordneten Innengewinde auf den Gewindebolzen zu schrauben, bevor der Dehnprozess beginnen kann. Hingegen wären andere Werkzeuge als Maul- oder Ringschlüssel wenig geeignet, da mit ihnen eine Schädigung des schlanken Messstabs und der daran angebrachten Markierung drohen würde.

In der Praxis, in der aufeinanderfolgend häufig eine Vielzahl gleichartiger Spannprozesse durchgeführt werden muss, wären die Nebenzeiten für das Festschrauben und später wieder Lösen der Wechselbuchse mittels eines Maul- oder Ringschlüssels zeitraubend.

Aus der GB 2 222 973 A und aus der JP 3 159908 U sind jeweils als Adapter ausgebildete Werkzeuge bekannt, die sich aus einem ersten Längsabschnitt, welcher auf einen Mehrkant aufsetzbar ist, und einem zweiten Längsabschnitt zusammensetzen, wobei der zweite Längsabschnitt an seiner Außenseite mit Schlüsselflächen versehen ist. Die Werkzeuge sind ferner mit Queröffnungen versehen, durch welche Bauteile hindurch gesteckt sind oder sich hindurch führen lassen.

Der Erfindung liegt die Aufgabe zugrunde, die mit dem einzelnen Spannprozess verbundenen Nebenzeiten zu verkürzen.

Zur Lösung dieser Aufgabe wird eine Spannvorrichtung zum Dehnen eines Gewindebolzens mit den Merkmalen des Patentanspruchs 1 vorgeschlagen.

Bei dem lösbar an den Außenmehrkant ansetzbaren Werkzeug handelt es sich um einen Antriebsadapter mit mindestens zwei Funktionsabschnitten. Einen ersten Funktionsabschnitt bildet ein hutförmiger Abschnitt, welcher an seiner Innenseite mit Werkzeugflächen versehen ist, welche die formschlüssige Drehverbindung mit dem Außenmehrkant an der Wechselbuchse sicherstellen. Der zweite Funktionsabschnitt ist ein in Verlängerung zu dem hutförmigen Abschnitt einstückig ausgebildeter, schlanker Antriebsabschnitt. Dieser ist vorzugsweise massiv und auf seinem Umfang mit Kupplungsstrukturen für ein motorbetriebenes Schraubwerkzeug versehen, z.B. für die Verbindung mit dem Spannfutter eines Elektroschraubers. Auf diese Weise ist es möglich, die Wechselbuchse mit z. B. einem überall verfügbaren Akkuschrauber fest- und nach dem Spannprozess wieder loszuschrauben. Die mit dem Spannprozess verbundenen Nebenzeiten lassen sich auf diese Weise deutlich reduzieren.

Die Wechselbuchse ist mit einem Längskanal und einem darin längsbeweglichen Stift versehen, dessen erstes Stiftende gegen das den Gewindeendabschnitt aufweisende Ende des Gewindebolzens abstützbar ist, und dessen zweites Stiftende über den Außenmehrkant hinausragt. Der hutförmige Abschnitt des Werkzeugs setzt sich aus einem die Werkzeugflächen aufweisenden ersten Längsabschnitt und einem sich daran anschließenden, auf der Werkzeuglängsachse einen Hohlraum bildenden, zweiten Längsabschnitt zusammen, wobei der zweite Längsabschnitt in Höhe des zweiten Stiftendes mit mindestens einer Sichtöffnung versehen ist. Diese Sichtöffnung gibt von außen den Blick auf das zweite Stiftende und eine daran vorhandene optische Markierung frei. Diese Markierung ist vorzugsweise eine Gut-/Schlechtmarkierung, beispielsweise eine grüne Banderole, bei deren Erkennbarkeit durch die Sichtöffnung der Bediener davon ausgehen kann, dass eine ausreichende Gewindeeingriffslänge zwischen der Wechselbuchse einerseits und dem Ende des zu spannenden Gewindebolzens andererseits vorliegt.

Um weitgehend unabhängig von der Drehlage des Antriebsadapters die darin angeordnete Markierung erkennen zu können, wird mit einer weiteren Ausgestaltung der Spannvorrichtung vorgeschlagen, dass der zweite Längsabschnitt in Höhe des zweiten Stiftendes bzw. der Markierung mit insgesamt zwei in Bezug auf den Hohlraum einander gegenüberliegend angeordneten Sichtöffnungen versehen ist. Selbstverständlich kann die Zahl dieser Sichtöffnungen auch drei oder vier betragen, sofern dadurch die Steifigkeit des Antriebsadapters gegenüber Drehmomenten nicht nachteilig beeinflusst wird.

Eine für die Gewindebolzen-Spannvorrichtung geeignetes Werkzeug und vorzugsweise ein Antriebsadapter setzt sich zusammen aus einem hutförmigen Abschnitt, der an seiner Innenseite mit Werkzeugflächen zur Drehkupplung mit einem Außenmehrkant versehen ist, und einem in Verlängerung zu dem hutförmigen Abschnitt angeordneten, schlankeren Antriebsabschnitt.

Gemäß einer Ausgestaltung des Werkzeugs ist der Antriebsabschnitt massiv ausgebildet und auf seinem Umfang mit Kupplungsflächen oder -strukturen für ein motorbetriebenes Schraubwerkzeug versehen.

Gemäß einer weiteren Ausgestaltung des Werkzeugs setzt sich der hutförmige Abschnitt aus einem die Werkzeugflächen aufweisenden ersten Längsabschnitt und einem sich daran anschließenden, auf der Werkzeuglängsachse einen Hohlraum bildenden zweiten Längsabschnitt zusammen, wobei der zweite Längsabschnitt mit mindestens einer Sichtöffnung versehen ist.

In Bezug auf die Anzahl dieser Sichtöffnungen wird eine Ausführungsform bevorzugt, bei der zwei in Bezug auf den Hohlraum einander gegenüberliegend angeordnete Sichtöffnungen vorhanden sind. Deren Anzahl kann jedoch, bei entsprechender Festigkeit des Antriebsadapters, auch größer sein.

Weitere Einzelheiten und Vorteile ergeben sich aus der nachfolgenden Beschreibung eines auf der Zeichnung dargestellten Ausführungsbeispiels. Es zeigen:
- Fig. 1: eine teils geschnitten dargestellte, hydraulisch arbeitende Gewindebolzen-Spannvorrichtung, aufgesetzt auf einen durch eine Mutter gesicherten Gewindebolzen und abgestützt auf einer Unterlage;
- Fig. 1a: eine vergrößerte Darstellung des oberen Zeichnungsteils der Fig. 1;
- Fig. 2: den oberen Teil der Gewindebolzen-Spannvorrichtung nach Fig. 1, jedoch ohne den oben aufgesetzten Antriebsadapter;
- Fig. 3: in Einzeldarstellung eine Seitenansicht des Antriebsadapters;
- Fig. 4: eine andere Seitenansicht des Antriebsadapters, wobei die Sichtebene zu der Sichtebene nach Fig. 3 um 90° verdreht ist und
- Fig. 5: einen Querschnitt durch den Antriebsadapter entsprechend der in Fig. 3 eingetragenen Schnittebene V-V.

Die hydraulisch betriebene Spannvorrichtung dient dem Anziehen und gegebenenfalls auch dem Lösen hoch belasteter Schraubverbindungen. Die Spannvorrichtung hat die Aufgabe, in Bolzenlängsrichtung für eine gewisse Zeit eine vorgegebene Vorspannkraft auf den Gewindebolzen 3 aufzubringen, um die Möglichkeit zu schaffen, momentenfrei die auf den Gewindebolzen 3 aufgeschraubte Mutter 4 der Schraubverbindung anzuziehen bzw. nachzuziehen. Zu diesem Zweck wird eine Wechselbuchse der im folgenden näher beschriebenen Spannvorrichtung auf das über die Mutter 4 hinaus vorstehende Gewinde des Gewindebolzens 3 aufgeschraubt und anschließend unter hydraulischen Zug gesetzt, wodurch sich der Gewindebolzen 3 in Längsrichtung dehnt.

Die Einschraubtiefe des Gewindebolzens ist begrenzt durch die Länge des Gewindeendabschnitts A, der oberhalb der Mutter 4 als Bolzenüberstand zur Verfügung steht. Die zur Verfügung gestellte Einschraubtiefe sollte mindestens gleich dem Gewindedurchmesser des Bolzens sein, vorzugsweise das 1,5 fache. Nur bei Einhaltung einer Mindesteinschraubtiefe ist sichergestellt, dass der Gewindebolzen 3 nicht durch den Spannprozess beschädigt wird. Wird ein Mindestwert für die Länge des Gewindeeingriffs am Gewindeendabschnitt A nicht eingehalten, kann es zu einem Abreißen am Gewindebolzenende kommen.

Die Bolzenspannvorrichtung weist ein Gehäuse aus einem oder mehreren Zylindern 1 auf. Die starre Fortsetzung des Gehäuses bzw. der Zylinder 1 in Längsrichtung L nach unten hin bildet ein Stützrohr 2, welches an seiner Unterseite offen ist und sich auf jener Unterlage 8, zumeist einem Maschinenteil, abstützt, auf der sich auch die Mutter 4 abstützt. Seitlich an dem aus den Zylindern 1 zusammengesetzten Gehäuse befindet sich ein Hydraulikanschluss 7, über den die Spannvorrichtung mit einer Hydraulikversorgung verbunden ist.

Außerdem kann ein durch Öffnungen in dem Stützrohr 2 hindurch arbeitendes Getriebe 15 vorgesehen sein, mit dem sich die auf den Gewindebolzen 3 geschraubte Mutter 4 drehen lässt. Dieses Drehen ist natürlich nur möglich, wenn die Spannvorrichtung arbeitet, und daher die Mutter 4 nicht durch erhebliche Reibung belastet ist.

Das Gehäuse kann einen oder mehrere Hydraulikzylinder enthalten, die über eine flexible, druckfeste Hydraulikleitung mit der externen Hydraulikversorgung verbunden sind. In jedem der Zylinder 1 ist, zu der Innenwandung des Zylinder 1 hin abgedichtet, ein Kolben in Längsrichtung beweglich angeordnet. Bei Einschalten der Hydraulikversorgung werden durch das Einspeisen von hydraulischem Druck in die Arbeitsräume der einzelnen Zylinder die darin angeordneten Kolben angehoben. Dies kann entgegen der Wirkung einer sich von oben her auf den Kolben abstützenden Druckfeder erfolgen.

Die Kolben sind starr mit einer in ihnen zentral angeordneten Wechselbuchse 10 verbunden, so dass die Längsbewegung der Kolben zu einer identischen Bewegung der Wechselbuchse 10 führt.

Die Wechselbuchse 10 ist mittels geeigneter Maßnahmen austauschbar gestaltet, sie lässt sich also gegen eine Wechselbuchse 10 anderer Geometrie austauschen, wohingegen der Kolben bzw. die Kolben nicht gegen andere Kolben ausgetauscht werden müssen.

Die Wechselbuchse 10 setzt sich einstückig aus einem unteren Kopplungsabschnitt 10A und einem oberen Schaftabschnitt 10B zusammen. Der Kopplungsabschnitt 10A befindet sich innerhalb des Stützrohres 2 und weist ein Innengewinde 11 auf, welches mit dem Außengewinde des Gewindebolzens 3 verschraubbar ist. Der Schaftabschnitt 10B der Wechselbuchse 10 ist umgeben von dem Kolben bzw. den Kolben, mit dem bzw. denen er, vorzugsweise durch eine Verschraubung, starr verbunden ist.

Zum Spannen des Gewindebolzens wird zunächst das Innengewinde 11 der Wechselbuchse 10 auf den Gewindeendabschnitt A des Gewindebolzens aufgeschraubt.

Durch anschließendes Einspeisen von hydraulischem Druck heben die im Zylinder 1 geführten Kolben unter Mitnahme der Wechselbuchse 10 an, wodurch es zu einer Längsdehnung des Gewindebolzens 3 kommt. Damit verbunden ist ein Reibungsverlust der Unterseite der Mutter 4, so dass diese sich jetzt auf dem Gewinde des Bolzens drehen, d. h. nachziehen lässt.

Für den Spannvorgang wichtig ist, dass die durch die Länge des Gewindeendabschnitts A zur Verfügung stehende Einschraubtiefe des Gewindebolzens 3 mit dem korrespondierenden Innengewinde 11 der Wechselbuchse 10 ausgenutzt wird, und eine ausreichende Länge des Gewindeeingriffs sicher erreicht wird.

Zur Kontrolle der Gewindeeingriffslänge befindet sich in einer zentral in der Wechselbuchse 10 angeordneten Längsführung 17 ein Stift 20. Dieser ist mit einem Bund oder einer Erweiterung 21 versehen, gegen den bzw. die sich eine andererseits gegenüber der Wechselbuchse 10 abgestützte Feder abstützt. Auf diese Weise ist der in der Längsführung 17 der Wechselbuchse längsbewegliche Stift 20 stets durch eine Kraft beaufschlagt, die ihn leicht nach unten zu dem Gewindebolzens 3 hin beaufschlagt.

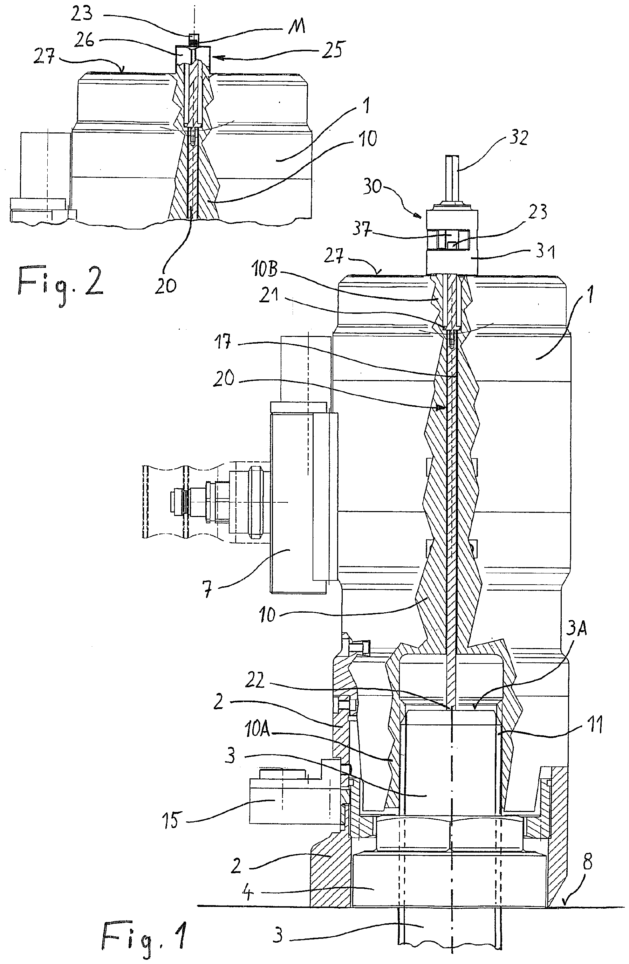

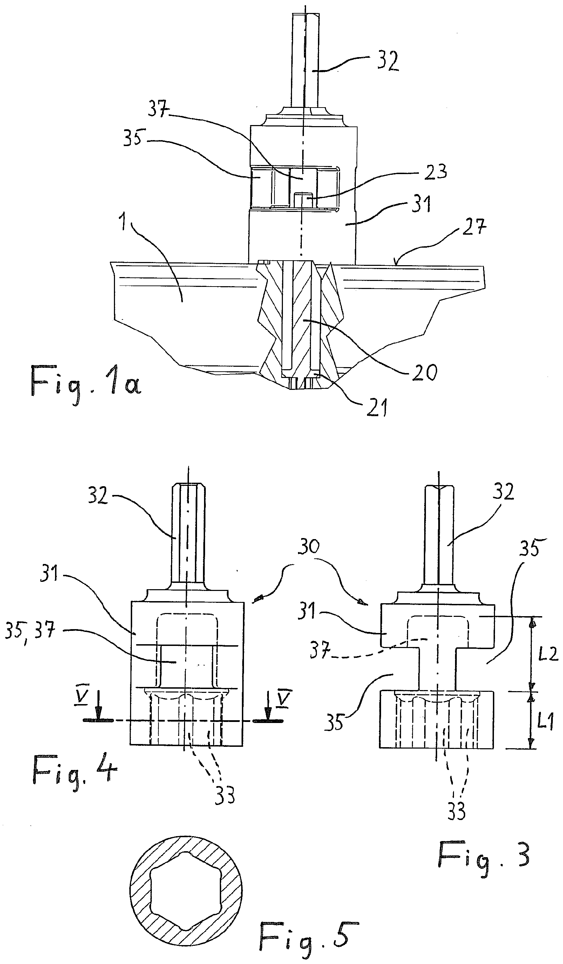

Der Stift 20 stützt sich mit seinem unteren Ende 22 axial gegen die Stirnfläche 3A des Gewindebolzens 3 ab. Das andere Ende 23 des Stifts 20 befindet sich im Bereich des oberen Teils der Spannvorrichtung. Dort sind Maßnahmen getroffen, um die Längsposition des Stiftendes 23 und damit auch die Position des Stifts 20 zu erfassen. Aus dieser Längsposition ist ableitbar, in welcher Höhe sich das untere Stiftende 22 befindet, was wiederum einen direkten Rückschluss auf die Länge des Gewindeeingriffs am Gewindeendabschnitt A zulässt. Denn wäre bei der Situation nach Fig. 1 die Länge A des Gewindeeingriffs geringer als dargestellt, wäre der Stift 20 weiter abgesenkt, was aus der Position des oberen Stiftendes 23 relativ zu der dieses Stiftende 23 umgebenden Wechselbuchse 10 detektierbar ist.

Zu diesem Zweck ist der Stift 20 an seinem oberen, freiliegenden Ende mit einer Markierung M versehen, z.B. einer grünen oder einer roten Farbmarkierung als Gut/Schlechtmarkierung.

Aus deren Höhenlage in Bezug auf die Oberkante der Wechselbuchse 10 oder eine Gegenmarkierung an der Wechselbuchse 10 kann der Benutzer mit einem Blick erkennen, ob der Gewindeeingriff bei A eine ausreichende Länge hat.

Das obere Stiftende 23 befindet sich zum Teil innerhalb eines Längsabschnitts 25 der Wechselbuchse 10, der nach oben über die Stirnfläche 27 des Zylindergehäuses 1 der Spannvorrichtung vorsteht. Die Markierung M an dem Stift 20 befindet sich, abhängig vom jeweiligen Gut- bzw. Schlechtstatus, teilweise oder ganz oberhalb dieses Längsabschnitts 25, und liegt in diesem Fall frei und ist von allen Seiten her sichtbar.

Auf dem über die Stirnfläche 27 des Zylindergehäuses 1 vorstehenden Längsabschnitt 25 ist die Wechselbuchse 10 mit einem Außenmehrkant 26 versehen, z. B. mit einem Sechskant. An den Außenmehrkant 26 lässt sich ein Werkzeug ansetzen, um die Wechselbuchse 10 relativ zum Zylindergehäuse 1 zu drehen. Denn es muss, wie bereits beschrieben, in einem ersten Schritt die Wechselbuchse 10 mit ihrem Gewinde 11 vollständig auf den Gewindeendabschnitt A aufgeschraubt werden.

Dieses Aufschrauben ist, falls es von Hand und unter Verwendung eines an den Außenmehrkant 26 angesetzten Gabel- oder Ringschlüssels erfolgt, sehr zeitraubend. Deutlich zeitsparender ist das Ansetzen eines mit einem entsprechenden Aufsatzwerkzeug, üblicherweise einer Werkzeugnuss, versehenen Elektroschraubers an den Außenmehrkant 26. Ein Aufsatzwerkzeug könnte jedoch das freiliegende Ende des Messstifts mit der daran angebrachten Markierung M beschädigen. Zudem könnte es den Blick auf die Markierung M verhindern. Der Bediener könnte daher nicht gleichzeitig die Wechselbuchse 10 mittels eines Elektroschraubers drehen, und währenddessen die Markierung M im Auge behalten.

Abweichend von der Bauart der üblichen Aufsatzwerkzeuge erfolgt daher das Drehen der Wechselbuchse 10 mittels eines von oben her auf den Außenmehrkant 26 aufsetzbaren Antriebsadapters 30, welcher in seinem Inneren genügend Platz und Bewegungsfreiheit für das freiliegende Ende des Messstifts lässt, und welcher den Blick auf die am Stiftende angebrachte Gut-/Schlechtmarkierung ermöglicht.

Fig. 1 zeigt die Vorrichtung mit, und Fig. 2 ohne den aufsetzbaren Antriebsadapter 30.

Bei dem Antriebsadapter 30 handelt es sich um ein Werkzeug aus einem hutförmigen Abschnitt 31, der an seiner Innenseite mit vorzugsweise sechs Werkzeugflächen 33 zur Drehkupplung mit dem Außenmehrkant 26 versehen ist, und einem in Verlängerung zu dem Abschnitt 31 angeordneten, im Vergleich zu dem Abschnitt 31 schlankeren Antriebsabschnitt 32. Auf den Antriebsabschnitt 32 lässt sich das Spannfutter eines elektrischen Schraubers, z. B. eines Akkuschraubers, spannen. Hierzu ist der Antriebsabschnitt 32 mit entsprechenden Kupplungsstrukturen versehen.

Der hutförmige Abschnitt 31 setzt sich aus einem innen die Werkzeugflächen 33 aufweisenden ersten Längsabschnitt L1, und einem sich daran in Werkzeuglängsrichtung anschließenden zweiten Längsabschnitt L2 zusammen, der einen auf der Werkzeuglängsachse angeordneten Hohlraum 37 bildet.

Der aus der Hutform resultierende, zusätzliche Hohlraum 37 ist von solcher Weite und Höhe, dass darin das freiliegende Ende des Messstifts 20 Platz findet, und zwar ungeachtet der jeweiligen Höhenposition des Messstifts 20. Wegen des durch die Hutform des Abschnitts 31 erzielten, zusätzlichen Hohlraums 37 kann es beim Aufschrauben der Wechselbuchse 10 auf den Gewindebolzen 3 nicht zu einem Kontakt mit dem Messstift 20, und damit nicht zu einer Beschädigung des Messstifts selbst oder der daran angebrachten Markierung M kommen.

Um die Markierung M stets von außen erkennen zu können, ist der zweite Längsabschnitt L2 in Höhe der Markierung M mit mindestens einer Sichtöffnung 35 versehen, durch die hindurch ein Blick in das Innere des Hohlraums 37 möglich ist. Beim Ausführungsbeispiel sind gemäß Fig. 3 zwei in Bezug auf den Hohlraum 37 einander gegenüberliegend angeordnete Sichtöffnungen 35 vorhanden, jedoch kann deren Anzahl auch größer sein.

Für eine gute Sicht in den Hohlraum 37 sollten die Sichtöffnungen 35 in Umfangsrichtung so groß sein, dass sie in ihrer Summe über mindestens zwei Drittel des Umfangs einen Blick in den zentralen Hohlraum 37 und auf die dort befindliche Markierung M ermöglichen.

### Bezugszeichenliste

- 1: Zylinder
- 2: Stützrohr
- 3: Gewindebolzen
- 3A: Stirnfläche Gewindebolzen
- 4: Mutter
- 5: Kolben
- 7: Hydraulikanschluss
- 8: Unterlage
- 10: Wechselbuchse
- 10A: Kopplungsabschnitt
- 10B: Schaftabschnitt
- 11: Innengewinde
- 15: Getreide
- 17: Längsführung
- 20: Stift
- 21: Erweiterung
- 22: Stiftende
- 23: Stiftende
- 25: Längsabschnitt
- 26: Außenmehrkant
- 27: Stirnfläche
- 30: Werkzeug, Antriebsadapter
- 31: hutförmiger Abschnitt
- 32: Antriebsabschnitt
- 33: Werkzeugfläche
- 35: Sichtöffnung
- 37: Hohlraum

- A: Gewindeendabschnitt
- L1: Längsabschnitt
- L2: Längsabschnitt
- M: Markierung

## Patentansprüche

1. Spannvorrichtung zum Dehnen eines Gewindebolzens durch Zug an dessen Gewindeendabschnitt, mit einem den Gewindeendabschnitt umgebenden Stützrohr (2), einem in Verlängerung des Stützrohrs (2) angeordneten Zylinder (1) mit mindestens einem darin in Längsrichtung bewegbaren, mit einer Hydraulikversorgung verbindbaren Kolben, und einer durch den Kolben axial mitnehmbar ausgebildeten Wechselbuchse (10), wobei die Wechselbuchse (10) an ihrem einen Ende mit einem Innengewinde (11) zum Verschrauben mit dem Gewindeendabschnitt versehen ist, an ihrem anderen Ende mit einem Außenmehrkant (26) versehen ist, und mit einem Längskanal (17) und einem darin längsbeweglichen Stift (20) versehen ist, dessen erstes Stiftende (22) gegen das den Gewindeendabschnitt aufweisende Ende des Gewindebolzens abstützbar ist, und dessen zweites Stiftende (23) über den Außenmehrkant (26) hinaus vorsteht, **gekennzeichnet durch** ein zum Drehen der Wechselbuchse (10) lösbar an den Außenmehrkant (26) ansetzbares Werkzeug, wobei sich das Werkzeug (30) aus einem hutförmigen Abschnitt (31), der an seiner Innenseite mit Werkzeugflächen (33) zur Drehkupplung mit dem Außenmehrkant (26) versehen ist, und einem in Verlängerung zu dem hutförmigen Abschnitt (31) angeordneten, schlankeren Antriebsabschnitt (32) zusammensetzt, wobei sich der hutförmige Abschnitt (31) des Werkzeugs (30) aus einem die Werkzeugflächen (33) aufweisenden ersten Längsabschnitt und einem sich daran anschließenden, auf der Werkzeuglängsachse einen Hohlraum (37) bildenden zweiten Längsabschnitt zusammensetzt, und wobei der zweite Längsabschnitt in Höhe des zweiten Stiftendes (23) mit mindestens einer Sichtöffnung (35) versehen ist.

2. Spannvorrichtung nach Anspruch 1, **dadurch gekennzeichnet, dass** der Antriebsabschnitt (32) massiv ausgebildet und auf seinem Umfang mit Kupplungsflächen für ein motorbetriebenes Schraubwerkzeug versehen ist.

3. Spannvorrichtung nach Anspruch 1, **dadurch gekennzeichnet, dass** der zweite Längsabschnitt in Höhe des zweiten Stiftendes (23) mit zwei in Bezug auf den Hohlraum (37) einander gegenüberliegend angeordneten Sichtöffnungen (35) versehen ist.

4. Spannvorrichtung nach Anspruch 3, **dadurch gekennzeichnet, dass** das zweite Stiftende (23) in Höhe der mindestens einen Sichtöffnung (35) mit einer optischen Markierung (M) versehen ist.

## Claims

1. Tensioning device for extending a threaded bolt by tensioning the threaded end portion thereof, comprising a supporting tube (2) surrounding the threaded end portion, a cylinder (1) arranged in an extension of the supporting tube (2) with at least one piston which is movable in the cylinder in the longitudinal direction and can be connected to a hydraulic supply, and an exchange bushing (10) which can be carried along axially by the piston, wherein the exchange socket (10) is provided at one end with an internal thread (11) for screwing to the threaded end portion and is provided at the other end with an external polygon (26), and with a longitudinal channel (17) and a pin (20) which is longitudinally movable therein, the first pin end (22) thereof being capable of being supported against the end of the threaded bolt which has the threaded end portion, and the second pin end (23) projecting beyond the external polygon (26), **characterised by** a tool which can be attached releasably to the external polygon (26) for turning of the exchange socket (10), wherein the tool (30) is composed of a cup-shaped portion (31), which is provided on an inner face with tool surfaces (33) for rotary coupling to the external polygon (26), and a thinner drive portion (31) arranged in an extension of the cup-shaped portion (31), wherein the cup-shaped portion (31) of the tool (30) is composed of a first longitudinal portion having the tool surfaces (33) and a second longitudinal portion adjoining the first and forming a cavity (37) on the longitudinal axis of the tool, and wherein the second longitudinal portion is provided with at least one viewing opening (35) at the height of the second pin end (23).

2. Tensioning device according to claim 1, **characterised in that** the drive portion (32) is solid and is provided on its circumference with coupling faces for a motor-operated screwdriver.

3. Tensioning device according to claim 1, **characterised in that** the second longitudinal portion is provided at the height of the second pin end (23) with two viewing openings (35) arranged opposite one another with regard to the cavity (37).

4. Tensioning device according to claim 3, **characterised in that** the second pin end (23) is provided with a visual marking (M) at the height of the at least one viewing opening (35).

## Revendications

1. Dispositif de serrage pour l'extension d'un boulon fileté par traction sur sa partie d'extrémité filetée, avec un tube de soutien (2) entourant la partie d'extrémité filetée, un cylindre (1) disposé dans le prolongement du tube de soutien (2) avec un piston déplaçable en direction longitudinale dans celui-ci et pouvant être raccordé à une alimentation hydraulique, et une douille alternative (10) pouvant être entraînée axialement par le piston, dans lequel la douille alternative (10) est munie à sa première extrémité d'un filet intérieur (11) à visser avec la partie d'extrémité filetée, est munie à son autre extrémité d'un polygone extérieur (26), et est munie d'un canal longitudinal (17) et d'une tige (20) déplaçable longitudinalement dans celui-ci, dont la première extrémité de tige (22) peut s'appuyer contre l'extrémité du boulon fileté présentant la partie d'extrémité filetée, et dont la seconde extrémité de tige (23) est saillante au-delà du polygone extérieur (26), **caractérisé par** un outil applicable de façon amovible au polygone extérieur (26) pour faire tourner la douille alternative (10), dans lequel l'outil (30) se compose d'une partie en forme de chapeau (31), qui est munie sur son côté intérieur de faces d'outil (33) pour le couplage rotatif avec le polygone extérieur (26), et d'une partie d'entraînement plus élancée (32), disposée dans le prolongement de la partie en forme de chapeau (31), dans lequel la partie en forme de chapeau (31) de l'outil (30) se compose d'une première partie longitudinale présentant les faces d'outil (33) et d'une seconde partie longitudinale s'y raccordant et formant un espace creux (37) sur l'axe longitudinal de l'outil, et dans lequel la seconde partie longitudinale est munie d'au moins une ouverture d'inspection (35) à hauteur de la seconde extrémité de tige (23).

2. Dispositif de serrage selon la revendication 1, **caractérisé en ce que** la partie d'entraînement (32) est massive et est munie à sa périphérie de faces de couplage pour un outil de vissage motorisé.

3. Dispositif de serrage selon la revendication 1, **caractérisé en ce que** la seconde partie longitudinale est munie à hauteur de la seconde extrémité de tige (23) de deux ouvertures d'inspection (35) disposées l'une en face de l'autre par rapport à l'espace creux (37).

4. Dispositif de serrage selon la revendication 3, **caractérisé en ce que** la seconde extrémité de tige (23) est munie d'un marquage optique (M) à hauteur de ladite au moins une ouverture d'inspection (35).
